# EUROPÄISCHE PATENTSCHRIFT

(11) **EP 2 219 505 B1**
(45) Veröffentlichungstag und Bekanntmachung des Hinweises auf die Patenterteilung: **08.08.2012**
(21) Anmeldenummer: 08854561.1
(22) Anmeldetag: 28.11.2008
(51) Int. Cl.: A47L 9/02, A47L 9/28

(54) **LUFT-VOLUMENSTROM- UND SCHIEBEKRAFT-REGELUNGSVORRICHTUNG**
AIR VOLUME FLOW AND PUSHING FORCE CONTROL DEVICE
DISPOSITIF DE RÉGULATION DE DÉBIT VOLUMIQUE D'AIR ET DE FORCE DE POUSSÉE

(30) Priorität: 28.11.2007 DE 102007057589
(43) Veröffentlichungstag der Anmeldung: 25.08.2010
(73) Patentinhaber: Kurz, Gerhard, 75382 Althengstett (DE); BSH Bosch und Siemens Hausgeräte GmbH, 81739 München (DE)
(72) Erfinder: SCHULZ, Detlef, 72657 Altenriet (DE); STREHLER, Thomas, 97616 Bad Neustadt (DE); HERMANN, Rudolf, 97633 Sulzfeld (DE); ILLIG, Roland, 97618 Heustreu (DE); LEHMANN, Peter, 98617 Meiningen (DE); HAMM, Silvio, 98617 Sülzfeld (DE)
(74) Vertreter: Witte, Weller & Partner
(86) Internationale Anmeldenummer: PCT/EP2008/010115
(87) Internationale Veröffentlichungsnummer: WO 2009/068299

(56) Entgegenhaltungen:
- EP-A- 0 458 057
- EP-A- 0 636 341
- WO-A-02/091899
- DE-U1- 9 217 416

## Beschreibung

Die vorliegende Erfindung betrifft eine Luft-Volumenstrom- und Schiebekraft-Regelungsvorrichtung für einen Staubsauger, der zumindest einen Motor, eine Staubaufnahmeeinrichtung und eine Saugdüse aufweist, mit einer Regelungseinrichtung zur Regelung der Motorleistung, und einem ersten Sensor zur Erfassung des Luft-Volumenstroms, der zusammen mit der Regelungseinrichtung einen ersten Regelkreis bildet, um auf der Basis des Signals des ersten Sensors den Luft-Volumenstrom auf einem vorgegebenen Luft-Volumenstrom-Wert zu halten. Luft-Volumenstrom-Regelungsvorrichtungen für Staubsauger sind allgemein bekannt. Sie werden dazu eingesetzt, den Luft-Volumenstrom auf einem vorgegebenen Wert konstant zu halten, unabhängig vom Füllungsgrad eines im Staubsauger vorhandenen Staubbeutels. Ohne eine solche Regelung würde der Luft-Volumenstrom bei leerem Staubbeutel aufgrund des geringeren Widerstands sehr hoch sein, während er bei gefülltem Staubbeutel entsprechend gering wäre. Dies würde zu unterschiedlichen Saugergebnissen führen, was nicht erwünscht ist. Darüber hinaus ist die Luft-Volumenstrom-Regelung unter energetischen Gesichtspunkten vorteilhaft, da bei leerem Staubbeutel mit einer geringeren Motorleistung gearbeitet werden kann.

Die Erfassung des Luft-Volumenstroms kann beispielsweise über die Messung des Drucks zwischen der Staubbeutelaufnahmeeinrichtung und dem Motor erfolgen. Da der Druck in einer festen Beziehung zum Luft-Volumenstrom steht, kann über diese Messung auf den Luft-Volumenstrom geschlossen werden. Verändert sich dieser Druck, geht_ die Regelung davon aus, dass sich der Staubbeutel gefüllt hat und wird als Reaktion darauf die Motorleistung des Motors erhöhen, um den Luft-Volumenstrom konstant zu halten.

Eine Luft-Volumenstrom-Regelung mit einer Regelungseinrichtung zur Regelung der Motorleistung und einem Sensor zur Erfassung des Luft-Volumenstroms, gemäß dem Oberbegriff des Anspruchs 1, ist zum Beispiel aus der EP 0 458 057 A bekannt.

Die Luft-Volumenstrom-Regelung der vorgenannten Art spricht auch dann an, wenn sich der Luft-Volumenstrom nicht durch das Füllen des Staubbeutels verringert, sondern beispielsweise dadurch, dass die Saugdüse auf einen weichen Untergrund, beispielsweise einen weichen dichten Teppich, gebracht wird. Die Regelung versucht auch in diesem Fall, den Luft-Volumenstrom konstant zu halten und erhöht deshalb die Motorleistung. Das hat jedoch zur Folge, dass die zum Bewegen der Saugdüse erforderliche Kraft, die nachfolgend als Schiebekraft bezeichnet wird, zunimmt und damit die Benutzung des Staubsaugers erschwert.

Vor diesem Hintergrund besteht die Aufgabe der vorliegenden Erfindung darin, die eingangs genannte Luft-Volumenstrom-Regelungsvorrichtung so weiterzubilden, dass ihr die genannten Nachteile nicht mehr anhaften.

Diese Aufgabe wird dadurch gelöst, dass ein zweiter Sensor zur Erfassung einer zum Schieben der Saugdüse erforderlichen Schiebekraft vorgesehen ist, der zusammen mit der Regelungseinrichtung einen zweiten Regelkreis bildet und dass eine Regelkreis-Auswahleinrichtung vorgesehen ist, die abhängig von den Signalen der beiden Sensoren einen der beiden Regelkreise aktiviert.

D.h. mit anderen Worten, dass die erfindungsgemäße Regelungsvorrichtung zwei Regelkreise besitzt, nämlich einen für den Luft-Volumenstrom und einen für die Schiebekraft. Beide Regelkreise sind jedoch nicht gleichzeitig aktiv. Vielmehr wählt die Regelkreis-Auswahleinrichtung einen der beiden Regelkreise zur Regelung der Motorleistung aus und zwar abhängig davon, welche Werte die beiden Sensoren liefern. Signalisiert in einer bevorzugten Ausgestaltung der Erfindung bspw. der zweite Sensor eine Schiebekraft, die größer als ein vorgegebener Wert ist, schaltet die Regelkreis-Auswahleinrichtung vom ersten Regelkreis, der eine Luft-Volumenstrom-Regelung ausführt, auf den zweiten Regelkreis, der eine Schiebekraft-Regelung ausführt. Dieser Regelkreis bleibt solange aktiv, bis die Regelkreis-Auswahleinrichtung vom zweiten Sensor signalisiert bekommt, dass die Schiebekraft den vorgegebenen maximalen Wert wieder unterschritten hat.

Die erfindungsgemäße Luft-Volumenstrom- und Schiebekraft-Regelungsvorrichtung sieht folglich eine Regelkreis-Auswahleinrichtung vor, die abhängig von festgelegten Regeln, die in dieser Auswahleinrichtung hinterlegt sind, einen der beiden Regelkreise aktiviert.

Bei einer bevorzugten Weiterbildung ist der erste Sensor ein Drucksensor, vorzugsweise ein analoger Drucksensor.

Diese Maßnahme hat sich unter ökonomischen Aspekten als vorteilhaft herausgestellt. Analoge Drucksensoren sind kostengünstig und sehr zuverlässig. Da eine feste Beziehung zwischen dem gemessenen Druck und der Strömungsgeschwindigkeit besteht, kann aus dem gemessenen Druck auf den Luft-Volumenstrom geschlossen werden.

Selbstverständlich ist es auch denkbar, den ersten Sensor als Sensormessung der Strömungsgeschwindigkeit vorzusehen.

Bei einer bevorzugten Weiterbildung ist der zweite Sensor ein Drucksensor, der den im Bereich der Saugdüse vorhandenen Unterdruck erfasst.

Dieser Drucksensor kann ebenfalls als analoger Drucksensor vorgesehen sein. Da die zum Schieben der Saugdüse über den Boden erforderliche Kraft in direkter Beziehung steht zu dem im Bereich der Saugdüse herrschenden Unterdruck, kann auf vorteilhafte Weise über den gemessenen Unterdruck auf die Schiebekraft geschlossen werden.

Selbstverständlich wäre es auch denkbar, statt dem Drucksensor einen Kraftmesssensor, beispielsweise in Form von Dehnungsmessstreifen, vorzusehen, um damit die Schiebekraft direkt zu messen.

Bei einer bevorzugten Weiterbildung ist der Drucksensor als Druckschalter ausgelegt, der bei Überschreiten eines vorgegebenen Unterdrucks ein Signal abgibt.

Diese Maßnahme hat sich als besonders kostengünstig herausgestellt; da der Drucksensor lediglich das Überschreiten eines vorgegebenen Unterdruckwerts anzeigen muss, nicht jedoch einen absoluten Wert.

Die der Erfindung zugrunde liegende Aufgabe wird auch von einem Verfahren zur Regelung des Luft-Volumenstroms eines Staubsaugers, das folgende Schritte aufweist:
Erfassen des Luft-Volumenstroms zwischen Staubaufnahmeeinrichtung und Motor;
Erfassen der zum Schieben der Saugdüse erforderlichen Schiebekraft,
Regeln der Leistung des Motors derart, dass die Schiebekraft unterhalb eines vorgegebenen Werts liegt, solange die erfasste Schiebekraft größer ist als ein vorgegebener Wert, und ansonsten Regeln der Leistung des Motors derart, dass ein vorgegebener Luft-Volumenstrom-Wert aufrecht erhalten wird.

D.h. mit anderen Worten, dass das erfindungsgemäße Verfahren zwei Regelkreise vorsieht, nämlich einerseits ein Regelkreis für die Regelung des Luft-Volumenstroms und andererseits ein Regelkreis für das Regeln der Schiebekraft. Die Regelung des Luft-Volumenstroms auf einen vorgegebenen Wert erfolgt immer dann, wenn die Schiebekraft einen ebenfalls vorgegebenen maximalen Wert nicht übersteigt. Sobald dieser maximale Wert jedoch überschritten wird, wird der andere Regelkreis aktiviert und es wird so geregelt, dass die Schiebekraft unter den vorgegebenen maximalen Schiebekraftwert gelangt. Sobald die erfasste Schiebekraft wieder unter dem maximalen Schiebekraftwert liegt, wird auf die Regelung des Luft-Volumenstroms zurückgegangen.

Der Vorteil dieses erfindungsgemäßen Verfahrens liegt u.a. darin, dass die Benutzung des Staubsaugers weiter verbessert wird. Es wird einerseits gewährleistet, dass die Saugleistung auch bei sich füllendem Staubbeutel konstant bleibt und andererseits wird die Schiebekraft dann positiv beeinflusst, wenn sie einen vorgegebenen Wert übersteigt, so dass der Benutzer nie eine zu hohe Kraft zum Schieben der Saugdüse aufwenden muss.

Bei einer bevorzugten Weiterbildung des Verfahrens wird der Druck zwischen Staubaufnahmeeinrichtung und Motor erfasst, um darüber auf den Luft-Volumenstrom zu schließen.

Die Erfassung des Drucks ist im Vergleich zu einer Erfassung der Strömungsgeschwindigkeit einfacher und kostengünstiger möglich.

Bei einer bevorzugten Weiterbildung des Verfahrens wird die Schiebekraft über das Erfassen des Unterdrucks der Saugdüse ermittelt.

Auch diese Maßnahme führt in der Praxis zu Kosteneinsparungen, da die Ermittlung der Schiebekraft über Dehnungsmessstreifen, was alternativ auch möglich wäre, mit höheren Kosten verbunden ist.

Die der Erfindung zugrunde liegende Aufgabe wird auch von einem Bodenstaubsauger gelöst, der eine erfindungsgemäße Regelungsvorrichtung enthält.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun nachfolgend anhand eines Ausführungsbeispiels unter Zuhilfenahme von Figuren näher erläutert. Dabei zeigen:
- Fig. 1: eine schematische Darstellung eines Staubsaugers; und
- Fig. 2: ein schematisches Blockdiagramm einer Regelungsvorrichtung, die in einem Staubsauger verwendet wird.

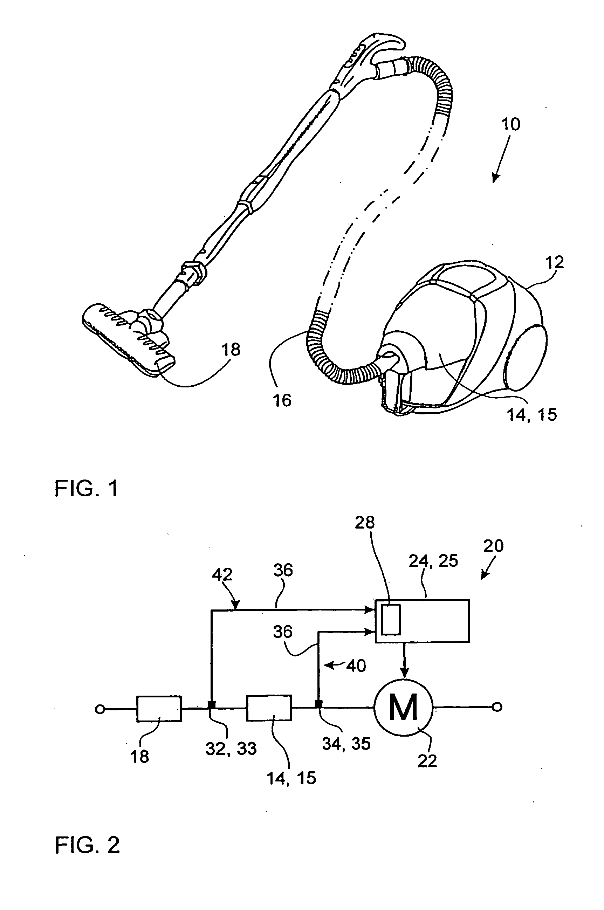

In Fig. 1 ist ein Staubsauger, insbesondere ein Bodenstaubsauger schematisch dargestellt und mit dem Bezugszeichen 10 gekennzeichnet. Der Bodenstaubsauger 10 weist ein Gehäuse 12 auf, das neben einem nicht zu erkennenden Motor auch eine Staubbeutelaufnahmeeinrichtung 14 mit einem Staubbeutel 15 aufnimmt. Darüber hinaus ist in dem Gehäuse 12 die zur Regelung des Motors erforderliche Elektronik enthalten.

Vom Staubsaugergehäuse 12 geht ein Schlauch und/oder Rohr 16 zu einer Bodensaugdüse 18, die zum Reinigen eines Bodens über diesen geschoben wird. Da der allgemeine Aufbau eines solchen Bodenstaubsaugers allgemein bekannt ist, wird darauf nicht weiter eingegangen.

Die vom Motor angesaugte Luft gelangt beim Saugen über die Bodensaugdüse 18 und den Schlauch 16 in den Staubbeutel 15, der die Staubpartikel herausfiltert, passiert dann den Motor und gelangt wieder aus dem Staubsaugergehäuse 12 nach außen. Um das Saugergebnis konstant zu halten, ist es erforderlich, den durch den Staubbeutel verursachten sich ständig ändernden Strömungswiderstand auszugleichen. Für ein gutes Saugergebnis soll nämlich der Luft-Volumenstrom zwischen Staubbeutel und Motor konstant sein.

Um eine solche Luft-Volumenstrom-Konstanthaltung zu realisieren, umfasst der Bodenstaubsauger 10 einen ersten Regelkreis, der einen ersten Sensor zur Erfassung des Luft-Volumenstroms zwischen Staubbeutelaufnahmeeinrichtung 14 und Motor aufweist, und abhängig davon die Leistung des Motors regelt.

Wird bei wirksamer Luft-Volumenstrom-Regelung die Bodensaugdüse 18 von einem harten Boden auf einen weichen Teppichboden geschoben, verringert sich der Luftdurchfluss von außen in die Bodensaugdüse 18 und damit zum Staubbeutel deutlich, was zur Folge hat, dass die Luft-Volumenstrom-Regelung aufgrund des reduzierten Volumenstroms die Leistung des Motors erhöht, um den konstanten vorgegebenen Volumenstrom wieder zu erreichen.

Das führt jedoch dazu, dass sich die Bodensaugdüse noch stärker an den Boden ansaugt, so dass die zum Schieben der Bodensaugdüse benötigte Kraft weiter ansteigt, was eine Benutzung deutlich erschwert.

Um diesen Nachteil der Luft-Volumenstrom-Regelung zu überwinden, ist ein zweiter Regelkreis vorgesehen, der die Schiebekraft über einen Sensor erfasst und die Motorleistung so regelt, dass diese Schiebekraft einen vorgegebenen Wert nicht übersteigt.

Die beiden Regelkreise werden nun so miteinander verknüpft, dass der zweite Regelkreis, der die Schiebekraft beeinflusst, immer dann zum Einsatz gelangt, wenn die Schiebekraft einen vorbestimmten Wert übersteigt. Der erste Regelkreis ist dann deaktiviert. Die Regelung der Schiebekraft über den zweiten Regelkreis erfolgt solange, bis der vorgegebene Wert unterschritten wird. Dann wird der erste Regelkreis wieder aktiviert und der zweite Regelkreis wird deaktiviert.

Die beiden vorgesehenen Regelkreise werden also nach vorbestimmten Kriterien bzw. Regeln eingesetzt, wobei immer nur einer der beiden Regelkreise aktiv ist, während der andere Regelkreis inaktiv ist. Die Auswahl des zu aktivierenden Regelkreises erfolgt hierbei in dem beschriebenen Ausführungsbeispiel auf der Grundlage der erfassten Schiebekraft. Das Überschreiten einer vorgegebenen Schiebekraft führt zur Aktivierung des zweiten Regelkreises, während ansonsten der erste Regelkreis aktiv ist.

In Fig. 2 ist der Regelungsaufbau schematisch dargestellt, wobei Bodensaugdüse 18 und Staubbeutelaufnahmeeinrichtung 14 als Rechtecke dargestellt sind und jeweils einen Strömungswiderstand symbolisieren. Die Regelungsvorrichtung 20 umfasst eine Regelungsschaltung 24, beispielsweise in Form eines Mikroprozessors 25, die bestimmte Eingangssignale über Leitungen 36 empfängt, auswertet und als Leistungsregelungssignal an den Motor 22 (bzw. an eine Phasenanschnittsteuerung) abgibt.

Die Regelungsvorrichtung 20 umfasst einen Drucksensor 32, der der Bodensaugdüse 18 zugeordnet ist, und der den in der Bodensaugdüse 18 herrschenden Unterdruck misst. Der Drucksensor 32 kann entweder im Bereich der Bodensaugdüse 18 vorgesehen sein, oder am Ende des Schlauchs 16 im Gehäuse 12 des Bodenstaubsaugers.

Die Regelungsvorrichtung 20 weist einen weiteren Drucksensor 34 auf, der zwischen Staubbeutelaufnahmeeinrichtung 14 und Motor 22 innerhalb des Gehäuses 12 angeordnet ist.

Beide Sensoren 32, 34 geben ihre Signale an die Regelungsschaltung 24 über Leitungen 36 ab. Auf diese Art und Weise werden zwei Regelkreise 40, 42 aufgebaut, wobei der erste Regelkreis 40 den Drucksensor 34 und die Regelungsschaltung 24 aufweist und der zweite Regelkreis 42 den Drucksensor 32 und die Regelungsschaltung 24.

Der erste Regelkreis dient - wie bereits erwähnt - der Aufrechterhaltung eines konstanten Luft-Volumenstroms zwischen Staubbeutelaufnahmeeinrichtung 14 und Motor 22 und der zweite Regelkreis 42 gewährleistet, dass die Schiebekraft einen bestimmten Wert nicht überschreitet.

Hierbei ist anzumerken, dass in dem vorliegenden Ausführungsbeispiel die Schiebekraft nicht direkt über einen Kraftsensor ermittelt wird, sondern indirekt über die Messung des Unterdrucks zwischen Boden und Bodensaugdüse 18. Da eine proportionale Beziehung zwischen Schiebekraft und Unterdruck besteht, kann über die Erfassung des Unterdrucks auf die erforderliche Schiebekraft geschlossen werden. Je höher der Unterdruck an der Bodensaugdüse 18 desto größer wird die Kraft, um die Bodensaugdüse über den Boden zu schieben bzw. zu ziehen.

Im vorliegenden Ausführungsbeispiel ist der Drucksensor 32 darüber hinaus als Druckschalter 33 ausgeführt, der nur bei Überschreiten eines vorgegebenen Unterdrucks ein Signal abgibt, so dass auf der Grundlage des abgegebenen Signals lediglich erkannt werden kann, ob der Unterdruck unter oder über einem vorgegebenen Wert liegt.

Im Gegensatz dazu ist der Drucksensor 34 als analoger Drucksensor 35 ausgeführt, wobei über den gemessenen Druck auf die Strömungsgeschwindigkeit der Luft und damit auf den Luft-Volumenstrom geschlossen werden kann. Ein Strömungsgeschwindigkeitsmesssensor ist folglich nicht erforderlich, könnte aber durchaus alternativ statt dem Drucksensor 34 vorgesehen werden.

Die Aktivierung des ersten oder des zweiten Regelkreises 40, 42 erfolgt über eine Regelkreis-Auswahleinrichtung 28, die in der Regelungsschaltung 24 vorgesehen ist. Abhängig von dem abgegebenen Signal des Drucksensors 32 wird entweder der erste Regelkreis oder der zweite Regelkreis 40, 42 aktiviert.

Wie zuvor bereits erläutert, aktiviert die Regelkreis-Auswahleinrichtung 28 den ersten Regelkreis 40, wenn der Unterdruck an der Bodensaugdüse 18 unterhalb eines vorgegebenen Werts liegt, und schaltet auf den zweiten Regelkreis 42 um, wenn das Signal des Sensors 32, also der dort gemessene Unterdruck, über einen vorgegebenen Wert steigt.

Die Regelungsvorrichtung 20 gewährleistet folglich, dass einerseits der Luft-Volumenstrom konstant gehalten wird, auch wenn sich der Staubbeutel langsam füllt und damit der Strömungswiderstand ansteigt. Die Regelungsschaltung 24 steigert in diesem Fall die Leistung des Motors 22. Um andererseits zu verhindern, dass diese Regelung zu einem übermäßigen Ansteigen des Unterdrucks an der Bodensaugdüse 18 und damit der Schiebekraft führt, wird in diesem Fall der zweite Regelkreis aktiviert, der die Motorleistung wieder soweit verringert, bis der Unterdruck und damit die Schiebekraft einen maximalen Wert unterschritten hat.

An dieser Stelle sei noch darauf hingewiesen, dass die Regelungsschaltung so ausgelegt ist, dass sich stabile Regelungszustände einstellen. Der Fachmann kennt die notwendigen Maßnahmen, so dass darauf nicht weiter einzugehen braucht.

Insgesamt zeigt sich, dass mit der erfindungsgemäßen Regelungsvorrichtung und dem entsprechenden Regelungsverfahren die Vorteile der Luft-Volumenstrom-Regelung und der Schiebekraft-Regelung erreicht werden, ohne die Nachteile der einzelnen Verfahren hinnehmen zu müssen.

## Patentansprüche

1. Luft-Volumenstrom- und Schiebekraft-Regelungsvorrichtung für einen Staubsauger, der zumindest einen Motor, eine Staubaufnahmeeinrichtung und eine Saugdüse aufweist, mit
- einer Regelungseinrichtung (24) zur Regelung der Motorleistung,
- einem ersten Sensor (34, 35) zur Erfassung des Luft-Volumenstroms, der zusammen mit der Regelungseinrichtung (24) einen ersten Regelkreis (40) bildet, um auf der Basis des Signals des ersten Sensors den Luft-Volumenstrom auf einem vorgegebenen Luft-Volumenstrom-Wert zu halten, **gekennzeichnet durch**
einen zweiten Sensor (32, 33) zur Erfassung einer zum Schieben der Saugdüse (18) erforderlichen Schiebekraft, der zusammen mit der Regelungseinrichtung (24) einen zweiten Regelkreis (42) bildet, um auf der Basis des Signals des zweiten Sensors die Schiebekraft unterhalb eines vorgegebenen Werts zu halten, und
eine Regelkreis-Auswahleinrichtung (28), die abhängig von den Signalen der beiden Sensoren einen der beiden Regelkreise aktiviert.

2. Regelungsvorrichtung nach Anspruch 1, **dadurch gekennzeichnet, dass** die Regelkreis-Auswahleinrichtung (28) den zweiten Regelkreis (42) aktiviert, wenn das vom zweiten Sensor (32, 33) gelieferte Signal über einem vorgegebenen Wert liegt, und ansonsten den ersten Regelkreis (40) aktiviert.

3. Regelungsvorrichtung nach Anspruch 1 oder 2, **dadurch gekennzeichnet, dass** der erste Sensor (34, 35) ein Drucksensor (35) ist.

4. Regelungsvorrichtung nach Anspruch 1 oder 2, **dadurch gekennzeichnet, dass** der erste Sensor ein Sensor (34) zur Messung der Strömungsgeschwindigkeit ist.

5. Regelungsvorrichtung nach Anspruch 1, 2, 3 oder 4, **dadurch gekennzeichnet, dass** der zweite Sensor (32, 33) ein Drucksensor (33) ist, der den im Bereich der Saugdüse (18) vorhandenen Unterdruck erfasst.

6. Regelungsvorrichtung nach Anspruch 5, **dadurch gekennzeichnet, dass** der Drucksensor (32) als Druckschalter ausgelegt ist, der bei Überschreiten eines vorgegebenen Unterdrucks ein Signal abgibt.

7. Regelungsvorrichtung nach einem der Ansprüche 1 bis 4, **dadurch gekennzeichnet, dass** der zweite Sensor (32) ein Kraftsensor ist, der die auf die Saugdüse wirkende Schiebekraft misst.

8. Verfahren zur Regelung des Luft-Volumenstroms und der Schiebekraft eines Staubsaugers, der zumindest einen Motor, eine Staubaufnahmeeinrichtung und eine Saugdüse aufweist, mit den Schritten:
Erfassen des Luft-Volumenstroms zwischen Staubaufnahmeeinrichtung und Motor;
Erfassen der zum Schieben der Saugdüse erforderlichen Schiebekraft,
Regeln der Leistung des Motors derart, dass die Schiebekraft unterhalb eines vorgegebenen Werts liegt, solange die erfasste Schiebekraft größer ist als ein vorgegebener Wert, und ansonsten Regeln der Leistung des Motors derart, dass ein vorgegebener Luft-Volumenstrom-Wert aufrechterhalten wird.

9. Verfahren nach Anspruch 8, **dadurch gekennzeichnet, dass** der Druck zwischen Staubaufnahmeeinrichtung und Motor erfasst wird, um darüber auf den Luft-Volumenstrom zu schließen.

10. Verfahren nach Anspruch 8 oder 9, **dadurch gekennzeichnet, dass** die Schiebekraft über das Erfassen des Unterdrucks an der Saugdüse ermittelt wird.

11. Bodenstaubsauger mit einem Motor, einer Staubaufnahmeeinrichtung, die einen Staubbeutel aufnehmen kann, und einer Saugdüse, die über eine Saugleitung an den Motor angeschlossen ist, **gekennzeichnet durch** eine Regelungsvorrichtung (20) nach einem der Ansprüche 1 bis 7.

## Claims

1. An air volume flow and pushing force control device for a vacuum cleaner that has at least a motor, a dust receptacle and a suction nozzle, comprising
- a controller (24) for controlling the motor power,
- a first sensor (34, 35), for detecting the air volume flow, which in conjunction with the controller (24) forms a first control loop (40) in order to maintain the air volume flow at a prescribed air volume flow value on the basis of the signal of the first sensor,
**characterized by**
a second sensor (32, 33) for detecting a pushing force that is required to push the suction nozzle (18) and, in conjunction with the controller (24), forms a second control loop (42) in order to maintain the pushing force below a prescribed value on the basis of the signal of the second sensor, and
a control loop selection device (28) that activates one of the two control loops as a function of the signals of the two sensors.

2. The control device as claimed in claim 1, **characterized in that** the control loop selection device (28) activates the second control loop (42) when the signal supplied by the second sensor (32, 33) lies above a prescribed value, and otherwise activates the first control loop (40).

3. The control device as claimed in claim 1 or 2, **characterized in that** the first sensor (34, 35) is a pressure sensor (35).

4. The control device as claimed in claim 1 or 2, **characterized in that** the first sensor is a sensor (34) for measuring the flow rate.

5. The control device as claimed in claim 1, 2, 3 or 4, **characterized in that** the second sensor (32, 33) is a pressure sensor (33) that detects the negative pressure present in the region of the suction nozzle (18).

6. The control device as claimed in claim 5, **characterized in that** the pressure sensor (32) is designed as a pressure switch that outputs a signal upon overshooting of a prescribed negative pressure.

7. The control device as claimed in one of claims 1 to 4, **characterized in that** the second sensor (32) is a force sensor that measures the pushing force acting on the suction nozzle.

8. A method for controlling the air volume flow and the pushing force of a vacuum cleaner that has at least a motor, a dust receptacle and a suction nozzle, comprising the steps of:
detecting the air volume flow between dust receptacle and motor;
detecting the pushing force required to push the suction nozzle, and
controlling the power of the motor in such a way that the pushing force lies below a prescribed value as long as the detected pushing force is greater than a prescribed value, and otherwise controlling the power of the motor in such a way that a prescribed air volume flow value is maintained.

9. The method as claimed in claim 8, **characterized in that** the pressure between dust receptacle and motor is detected in order to infer the air volume flow via said pressure.

10. The method as claimed in claim 8 or 9, **characterized in that** the pushing force is determined by detecting the negative pressure at the suction nozzle.

11. A floor vacuum cleaner comprising a motor, a dust receptacle that can hold a dust bag, and a suction nozzle that is connected to the motor via a suction line, **characterized by** a control device (20) as claimed in one of claims 1 to 7.

## Revendications

1. Appareil de commande du débit volumique d'air et de la force de poussée destiné à un aspirateur, qui comprend au moins un moteur, un dispositif de réception de poussière et une buse d'aspiration, comportant :
- un dispositif de commande (24) destiné à commander la puissance du moteur,
- un premier capteur (34, 35) destiné à détecter le débit volumique d'air, qui forme, en association avec le dispositif de commande (24), un premier circuit de commande (40) permettant de maintenir, sur la base du signal du premier capteur, le débit volumique d'air à une valeur de débit volumique d'air prédéterminée,
**caractérisé par**
un second capteur (32, 33) destiné à détecter une force de poussée nécessaire pour pousser la buse d'aspiration (18), qui forme, en association avec le dispositif de commande (24), un second circuit de commande (42) permettant de maintenir la force de poussée en dessous d'une valeur prédéterminée sur la base du signal du second capteur, et
un dispositif de sélection de circuit de commande (28) qui active l'un des deux circuits de commande en fonction des signaux des deux capteurs.

2. Appareil de commande selon la revendication 1, **caractérisé en ce que** le dispositif de sélection de circuit de commande (28) active le second circuit de commande (42) lorsque le signal délivré par le second capteur (32, 33) se situe au-dessus d'une valeur prédéterminée et dans le cas contraire, active le premier circuit de commande (40).

3. Appareil de commande selon la revendication 1 ou 2, **caractérisé en ce que** le premier capteur (34, 35) est un capteur de pression (35).

4. Appareil de commande selon la revendication 1 ou 2, **caractérisé en ce que** le premier capteur est un capteur (34) destiné à mesurer la vitesse d'écoulement.

5. Appareil de commande selon la revendication 1, 2, 3 ou 4, **caractérisé en ce que** le second capteur (32, 33) est un capteur de pression (33) qui détecte la dépression présente dans la région de la buse d'aspiration (18).

6. Appareil de commande selon la revendication 5, **caractérisé en ce que** le capteur de pression (32) est conçu sous la forme d'un pressostat qui fournit un signal lors du dépassement d'une dépression prédéterminée.

7. Dispositif de commande selon l'une quelconque des revendications 1 à 4, **caractérisé en ce que** le second capteur (32) est un capteur de force qui mesure la force de poussée s'exerçant sur la buse d'aspiration.

8. Procédé destiné à commander le débit volumique d'air et la force de poussée d'un aspirateur, comprenant au moins un moteur, un dispositif de réception de poussière et une buse d'aspiration, comportant les étapes consistant à :
détecter le débit volumique d'air entre le dispositif de réception de poussière et le moteur ;
détecter la force de poussée nécessaire pour pousser la buse d'aspiration ;
commander la puissance du moteur de manière à ce que la force de poussée se situe en dessous d'une valeur prédéterminée tant que la force de poussée détectée est supérieure à une valeur prédéterminée et dans le cas contraire, commander la puissance du moteur de manière à maintenir une valeur prédéterminée du débit volumique d'air.

9. Procédé selon la revendication 8, **caractérisé en ce que** la pression entre le dispositif de réception de poussière et le moteur est détectée afin d'en déduire ainsi le débit volumique d'air.

10. Procédé selon la revendication 8 ou 9, **caractérisé en ce que** la force de poussée est déterminée par détection de la dépression au niveau de la buse d'aspiration.

11. Aspirateur comprenant un moteur, un dispositif de réception de poussière qui peut recevoir un sac à poussière et une buse d'aspiration qui est reliée au moteur par l'intermédiaire d'une conduite d'aspiration, **caractérisé par** un appareil de commande (20) selon l'une quelconque des revendications 1 à 7.
